# EUROPÄISCHE PATENTSCHRIFT

(11) **EP 1 200 755 B1**
(45) Veröffentlichungstag und Bekanntmachung des Hinweises auf die Patenterteilung: **10.12.2003**
(21) Anmeldenummer: 01951564.2
(22) Anmeldetag: 06.06.2001
(51) Int. Cl.: F16H 57/02, F16C 25/04

(54) **ANTRIEBSVORRICHTUNG**
DRIVE DEVICE
DISPOSITIF D'ENTRAINEMENT

(30) Priorität: 06.06.2000 DE 10027920
(43) Veröffentlichungstag der Anmeldung: 02.05.2002
(73) Patentinhaber: Valeo Motoren und Aktuatoren GmbH, 74321 Bietigheim-Bissingen (DE)
(72) Erfinder: KLAR, Josef, 74369 Löschgau (DE); HELMICH, Johannes, 97877 Wertheim (DE); KAISER, Friedrich, 74321 Bietigheim-Bissingen (DE); FREY, Ronald, 74357 Bönnigheim (DE); BAESKOW, Werner, 74394 Hessigheim (DE)
(74) Vertreter: Jahn, Wolf-Diethart
(86) Internationale Anmeldenummer: EP0106398
(87) Internationale Veröffentlichungsnummer: WO01094812

(56) Entgegenhaltungen:
- DE-A- 19 652 929
- DE-A- 19 822 478
- GB-A- 2 086 145
- US-A- 2 703 737

## Beschreibung

Die Erfindung betrifft eine Antriebsvorrichtung mit einem elektrischen Antriebsmotor, mit einem Gehäuse, mit wenigstens einer von dem Antriebsmotor angetriebenen Welle und mit Ausgleichsmitteln zum Ausgleichen des Axialspiels der Welle.

Unter der vom Antriebsmotor angetriebenen Welle wird im Nachfolgenden eine von dem Antriebsmotor über ein Getriebe, insbesondere über ein Schneckengetriebe, angetriebene Abtriebswelle als auch eine unmittelbar von dem Antriebsmotor angetriebene Ankerwelle verstanden.

Derartige Antriebsvorrichtungen finden insbesondere im Kraftfahrzeugbau als Stellmotoren für Sitzverstellungen, Lenksäulenverstellungen, Fensterheber, Schiebedächer oder dergleichen sowie als Antriebsvorrichtungen für Scheibenwischanlagen Verwendung. Die Antriebsvorrichtungen weisen in der Regel ein dem Antriebsmotor nachgeschaltetes Schneckengetriebe auf, das vorteilhafterweise geringe Abmessungen aufweist, große Kräfte übertragen kann und selbsthemmend ist.

Insbesondere aufgrund der schrägen Flanken der Schneckenwellen und des Schneckenrades eines derartigen Schneckengetriebes wirkt während des Betriebes der Antriebsvorrichtung eine Axialkraft auf die Ankerwelle des Antriebsmotors als auch auf die Abtriebswelle des Schneckengetriebes. Die Richtung der Axialkraft ist dabei abhängig von der Drehrichtung der Ankerwelle. Bei Drehrichtungswechsel des Antriebsmotors oder äußerem Lastwechsel dreht sich die Richtung der Axialkraft an der Ankerwelle als auch an der Abtriebswelle um, weil das Schneckenrad in umgekehrter Kraftrichtung beansprucht wird. Aufgrund von Fertigungstoleranzen der Einzelteile der Antriebsvorrichtung und aufgrund eines betriebsbedingten Verschleißes im Bereich der Axiallagerung der wellen kann es zu einem relativ großen unerwünschten Axialspiel der verschiedenen Wellen kommen. Durch ein derartiges Axialspiel kommt es bei einer Richtungsumkehr des Antriebsmotors zu ruckartigen Anfahrbewegungen sowie zu störenden Geräuschen.

Außerdem wird hierdurch ein positionsgenaues Anfahren bzw. Rückfahren von bspw. einer zu öffnenden Scheibe oder eines Schiebedaches erschwert.

Desweiteren kann es zu spürbaren Relativbewegungen kommen, wenn der Stellmotor z.B. als Sitzlehnenversteller eingesetzt wird und der Fahrer auch bei stehendem Motor das Axialspiel als Relativbewegung der Lehne wahrnimmt.

Desweiteren ist dieses Phänomen bei Lenkradverstellungen bekannt.

Aus der DE-OS 23 12 395 ist eine eingangs beschriebene, gattungsgemäße Antriebsvorrichtung bekannt geworden, welche als Ausgleichsmittel zum Ausgleichen des Axialspiels einer Welle ein an dem freien Ende der Welle, axial auf die Welle wirkendes keil- oder prismenförmiges Klötzchen aufweist. Das Klötzchen wird hierbei über eine Spiralfeder beaufschlagt. Nachteil einer derartigen Vorrichtung ist, dass zur Anordnung des Klötzchens sowie der zugehörigen Spiralfeder entsprechende Ausformungen an dem Gehäuse benötigt werden, die aufwendig in der Fertigung sind und zusätzlichen Bauraum beanspruchen.

Der vorliegenden Erfindung liegt deshalb die Aufgabe zugrunde, eine Antriebsvorrichtung der eingangs beschriebenen Art dahingehend weiterzubilden und auszugestalten, dass sie möglichst einfach aufgebaut ist und funktionssicher das Axialspiel der Welle ausgleicht.

Diese Aufgabe wird erfindungsgemäß dadurch gelöst, dass auf der Welle als Ausgleichsmittel eine radial gegen eine Federkraft aufweitbare Federringscheibe mit zwei radial auf die Wellenachse keilartig aufeinander zulaufenden Anlaufflächen angeordnet ist, dass die Welle einen mit der einen Anlauffläche korrespondierenden ringartigen Vorsprung und das Gehäuse einen mit der anderen Anlauffläche korrespondierenden Ringbund aufweist, wobei die Federringscheibe zwischen dem Vorsprung und dem Ringbund unter einer Vorspannkraft angeordnet ist.

Dadurch wird erfindungsgemäß erreicht, dass aufgrund der sich gegen das Gehäuse abstützenden, unter der Vorspannkraft stehenden Federringscheibe die Welle über die keilförmig aufeinander zulaufenden Anlaufflächen gegen den Ringbund mit einer Axialkraft beaufschlagt wird, die einen Ausgleich des Axialspiels bewirkt. Da die Federringscheibe zwischen dem Gehäuse und dem ringartigen Vorsprung der Welle angeordnet ist, ist nahezu kein extra Bauraum für die Anordnung der Ausgleichsmittel erforderlich. Vorteilhafterweise beschränkt sich erfindungsgemäß die Zahl der Einzelteile der Ausgleichsmittel lediglich auf die Federringscheibe, da der Vorsprung einstückig mit der Welle und der Ringbund einstückig mit dem Gehäuse ausführbar ist. Ein ganz wesentlicher Vorteil der Erfindung ist, dass aufgrund der vorgespannten Federringscheibe ein Axialspielausgleich bei sich drehendem als auch bei stehendem Antriebsmotor erfolgt.

Bei der Montage der Antriebsvorrichtung wird die zwischen dem Ringbund und dem Vorsprung der Welle angeordnete Federringscheibe aufgeweitet, wodurch der über die beiden keilartig aufeinander zulaufenden Anlaufflächen auf die Welle wirkende axiale Anteil der Vorspannkraft der Federringscheibe die Welle mit einer das Axialspiel ausgleichenden Axialkraft beaufschlagt.

Vorteilhafterweise verlaufen die Anlaufflächen symmetrisch unter einem Winkel von etwa 15° zu der von der Federringscheibe gebildeten Ebene, wobei die mit den Anlaufflächen korrespondierenden Flächen des Ringbundes und des Vorsprunges eine entsprechende Schrägung aufweisen. Dadurch wird eine gleichmäßige Krafteinleitung der Vorspannkraft der Federringscheibe zum einen in die Welle und zum anderen in das Gehäuse erreicht. Einem Verkeilen der Federringscheibe zwischen dem Ringbund und dem Vorsprung der welle wird entgegengewirkt.

Um ein ausreichendes Aufweiten der Federringscheibe zu gewährleisten, ist die Federringscheibe vorteilhafterweise geschlitzt ausgebildet. Zusätzlich kann vorgesehen sein, dass die Federringscheibe im Bereich des Innenumfangs schlitzartige Ausnehmungen aufweist, welche zusätzlich ein elastisches Aufweiten sowie Zusammenziehen der Federringscheibe ermöglichen.

Bei einer vorteilhaften Ausgestaltung der Erfindung weist die Federringscheibe einen geschlitzten Federspannring auf. Dadurch wird insbesondere eine höhere Federkonstante der Federringscheibe erreicht und die Federringscheibe kann mit einer höheren Vorspannkraft beaufschlagt werden.

Vorteilhafterweise ist der Federspannring in einer entlang des Umfanges der Federringscheibe verlaufenden Nut angeordnet. Dadurch kann die Federringscheibe mit dem Federspannring gemeinsam vormontiert werden, was zu einer erheblichen Vereinfachung der Endmontage der Antriebsvorrichtung führt.

Um ein Verrutschen bzw. Verdrehen des Federspannrings zu vermeiden, kann vorteilhafterweise vorgesehen sein, dass die Nut in dem der Schlitzung der Federringscheibe abgewandten Bereich einen Quersteg zur Aufnahme der Schlitzung des Federspannrings aufweist.

Bei einer anderen Weiterbildung der Erfindung weist die Welle einen ringnutartigen Einstich auf, in dem die Federringscheibe gerastet gehaltert ist. Dies hat den Vorteil, dass die Welle zusammen mit der Federringscheibe vormontiert werden kann und dass ein Lösen aufgrund der gerasteten Halterung der Federringscheibe auf der Welle verhindert wird.

Bei einer besonders bevorzugten Ausführungsform der Erfindung ist die Federringscheibe aus Kunststoff, insbesondere aus einem Polyamid, wobei der Kunststoff eine Gleitmittelbeschichtung aus insbesondere Graphit, Molybdändisulfid oder dergleichen aufweist bzw. Graphit, Molybdändisulfid oder dergleichen enthält. Dies bewirkt, dass die beiden Anlaufflächen der Federringscheibe ein gutes Gleitverhalten gegenüber zum einen des Vorsprunges der Welle und zum anderen dem Ringbund an dem Getriebegehäuse aufweist.

Vorteilhafterweise kann erfindungsgemäß vorgesehen sein, dass der Vorsprung an einem Zahnrad, insbesondere einem Schneckenrad an der Welle angeordnet ist. Dadurch entfällt ein extra an die Welle anzuordnender ringartiger Vorsprung.

Bei einer Weiterbildung der Erfindung ist der Vorsprung aus einem Kunststoff, insbesondere aus Polymethylenoxid. Ein derartiger Kunststoff weist insbesondere gegenüber einer Federringscheibe aus Polyamid vorteilhafte Gleiteigenschaften auf. Denkbar ist auch, dass der ringnutartige Einstich einstückig mit dem Vorspung als Kunststoffteil ausgeführt ist, wodurch eine Bearbeitung der Welle entfällt.

Bei einer anderen vorteilhaften Ausgestaltung der Erfindung ist der Ringbund an einem Gehäusedeckel des Gehäuses, insbesondere einem Zinkdruckgussdeckel angeordnet. Mit der Anordnung des Gehäusedeckels an dem Gehäuse wird bei der Montage der Antriebsvorrichtung der Ringbund gegen die dem Ringbund zugewandte Anlauffläche der Federringscheibe gedrückt, wodurch die Federringscheibe aufgeweitet und unter einer Vorspannkraft zwischen dem Vorsprung und dem Ringbund angeordnet ist.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Fig. 1.: einen Teilschnitt einer erfindungsgemäßen Antriebsvorrichtung in Draufsicht,
- Fig. 2: eine Federringscheibe in Draufsicht und
- Fig. 3: die Federringscheibe gemäß Fig. 2 im Querschnitt.

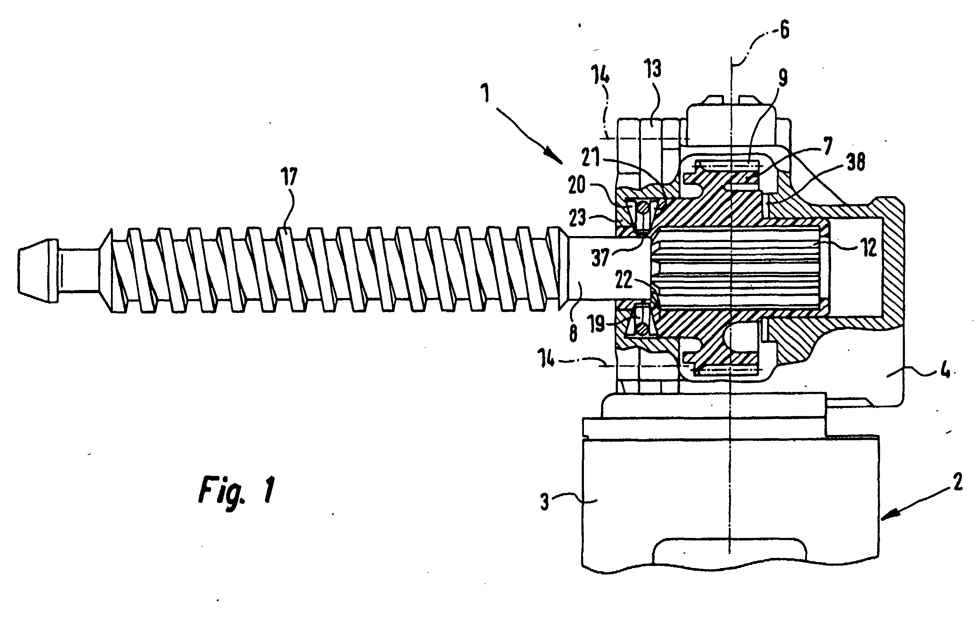

In der Fig. 1 ist eine Antriebsvorrichtung 1 mit einem elektrischen Antriebsmotor 2 und einem Gehäuse dargestellt. Das Gehäuse der Antriebsvorrichtung 1 untergliedert sich dabei in zwei Abschnitte, zum einen in ein Motorengehäuse 3 und ein Getriebegehäuse 4, das ein Schneckengetriebe aufnimmt. Der Antriebsmotor 3 weist eine Ankerwelle sowie eine an dem freien Ende der Ankerwelle angeordnete Schnecke auf. Die Ankerwelle des Antriebsmotors 2 verläuft entlang der Achse 6. In der Darstellung nach Fig. 1 ist die Ankerwelle mit der zugehörigen Schnecke nicht zu sehen, da von einem von der Schnecke angetriebenen Schneckenrad 7 und einer mit dem Schneckenrad 7 drehfest verbundenen Abtriebswelle 8 verdeckt ist.

Das Schneckenrad 7 weist an seinem Außenumfang eine die nicht zu sehende Schnecke kämmende Schrägverzahnung 9 auf. Das Schneckenrad 7 ist als Kunststoffteil an die Abtriebswelle 8 angeformt, die in diesem Bereich eine Geradverzahnung 12 zur formschlüssigen Verbindung des Schneckenrads 7 mit der Abtriebswelle 8 aufweist.

Das Getriebegehäuse 4 weist einen Gehäusedeckel 13 auf, der mit dem Getriebegehäuse 4 mittels Befestigungsschrauben 14 verschraubt ist. An dem dem Schneckenrad 7 abgewandten Bereich der Abtriebswelle 8 ist ein Trapezgewinde 17 vorhanden, auf dem ein nicht dargestellter Kulissenstein angeordnet werden kann, der über eine Mechanik das mit der Antriebsvorrichtung 1 betätigbare Bauteil antreibt. Die in der Fig. 1 dargestellte Antriebsvorrichtung 1 ist insbesondere zum Antrieb einer Sitzverstellung eines Sitzes für Kraftfahrzeuge vorgesehen.

Auf der Abtriebswelle 8 ist eine radial gegen eine Federkraft aufweitbare Federringscheibe 19 mit zwei radial auf die Wellenachse keilartig aufeinander zulaufenden Anlaufflächen 20 und 21 angeordnet. Die Welle 8 weist einen mit der Anlauffläche 21 korrespondierenden ringartigen Vorsprung 22 auf. Die andere Anlauffläche 20 der Federringscheibe 19 korrespondiert mit einem an dem Gehäuse 4 bzw. an dem Gehäusedeckel 13 vorhandenen Ringbund 23. Aufgrund der Verschraubung des Deckels 13 mit dem Gehäuse 4 ist die Federringscheibe 19 aufgeweitet zwischen dem Vorsprung 22 und dem Ringbund 23 unter einer Vorspannkraft angeordnet. Aufgrund der Vorspannung der Federringscheibe 19 wirkt die Federkraft über die Anlaufflächen 20, 21 radial auf die Abtriebswelle 8, wodurch diese mit einer das Axialspiel ausgeleicheden Axialkraft beaufschlagt wird.

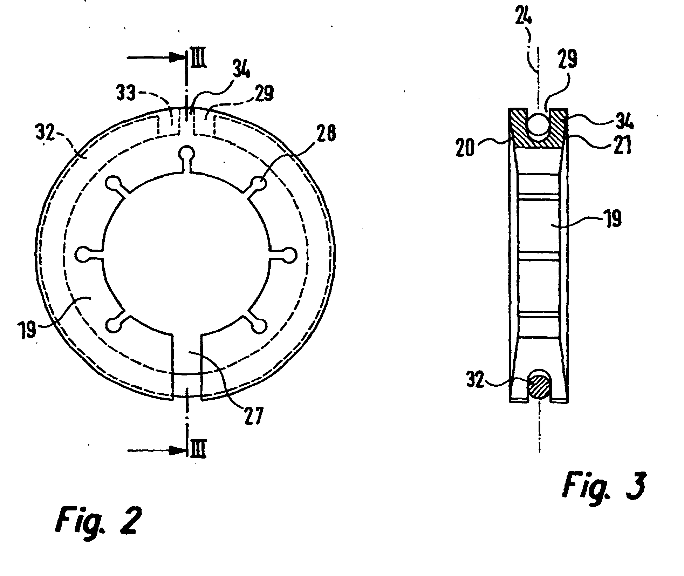

Wie aus Fig. 3 deutlich zu erkennen ist, verlaufen die Anlaufflächen 20 und 21 symmetrisch unter einem Winkel von etwa 15° zu der von der Federringscheibe gebildeten Ebene 24. Aus Fig. 2 ist zu erkennen, dass die Federringscheibe 19 geschlitzt ist und einen Schlitz 27 aufweist. Außerdem weist die Federringscheibe 19 im Bereich des Innenumfangs schlitzartige Ausnehmungen 28 auf. Die Federringscheibe 19 weist weiterhin in einer entlang des Umfangs der Federringscheibe verlaufenden Nut 29 einen Federspannring 32 auf, der ebenfalls eine Schlitzung 33 aufweist. In der Nut 29 ist in dem der Schlitzung 27 der Federringscheibe 19 abgewandten Bereich ein Quersteg 34 zur Aufnahme der Schlitzung 33 vorgesehen. Dadurch wird ein Verrutschen des Federspannrings 32 in der Nut 29 vermieden.

Wie aus Fig. 1 deutlich hervorgeht, weist das Schneckenrad 7 einen ringnutförmigen Einstich 37 auf, in dem die Federringscheibe 19 gerastet gehaltert ist. Denkbar ist auch, dass der ringnutförmige Einstich 37 nicht an dem Schneckenrad 7, sondern unmittelbar an der Welle 8 vorhanden ist. Durch die gerastete Halterung wird die Vormontage der Federringscheibe , 19 mit dem Schneckenrad 7 bzw. der Welle 8 erleichtert. Auf der der Federringscheibe abgewandten Stirnseite des Schneckenrades 7 ist zwischen dem Gehäuse 4 und dem Schneckenrad 7 eine Anlaufscheibe 38 vorhanden. Die Anlaufscheibe wirkt als Axiallager zwischen dem Getriebegehäuse 4 und dem Schneckenrad 7. Durch geeignete Materialwahl des Schneckenrades 7 und des Getriebegehäuses 4 kann eine derartige Anlaufscheibe auch entfallen.

## Patentansprüche

1. Antriebsvorrichtung (1) mit einem elektrischen Antriebsmotor (1), mit einem Gehäuse (3, 4, 13), mit wenigstens einer von dem Antriebsmotor (2) angetriebenen Welle (8) und mit Ausgleichsmitteln zum Ausgleichen des Axialspiels der Welle, **dadurch gekennzeichnet, dass** auf der Welle (8) als Ausgleichmittel eine radial gegen eine Federkraft aufweitbare Federringscheibe (19) mit zwei radial auf die Wellenachse keilartig aufeinander zulaufenden Anlaufflächen (20, 21) angeordnet ist, dass die Welle (8) einen mit der einen Anlauffläche (21) korrespondierenden ringartigen Vorsprung (22) und das Gehäuse (4, 13) einen mit der anderen Anlauffläche (20) korrespondierenden Ringbund (23) aufweist, wobei die Federringscheibe (19) zwischen dem Vorsprung (22) und dem Ringbund (23) unter einer Vorspannkraft angeordnet ist.

2. Antriebsvorrichtung (1) nach Anspruch 1, **dadurch gekennzeichnet, dass** die Anlaufflächen (20, 21) symmetrisch unter einem Winkel von etwa 15° zu der von der Federringscheibe (19) gebildeten Ebene (24) verlaufen, wobei die mit den Anlaufflächen (20, 21) korrespondierenden Flächen des Ringbundes (23) und des Vorsprunges (22) eine entsprechende Schrägung aufweisen.

3. Antriebsvorrichtung (1) nach Anspruch 1, **dadurch gekennzeichnet, dass** die Federringscheibe (19) geschlitzt ist.

4. Antriebsvorrichtung (1) nach Anspruch 1, 2 oder 3, **dadurch gekennzeichnet, dass** die Federringscheibe (19) im Bereich des Innenumfangs schlitzartige Ausnehmungen (28) aufweist.

5. Antriebsvorrichtung (1) nach einem der vorhergehenden Ansprüche, **dadurch gekennzeichnet, dass** die Federringscheibe (19) einen geschlitzten Federspannring (32) aufweist.

6. Antriebsvorrichtung (1) nach Anspruch 5, **dadurch gekennzeichnet, dass** der Federspannring (32) in einer entlang des Umfangs der Federringscheibe (19) verlaufenden Nut (29) angeordnet ist.

7. Antriebsvorrichtung (1) nach Anspruch 6, **dadurch gekennzeichnet, dass** die Nut (29) in dem der Schlitzung (27) der Federringscheibe (19) abgewandten Bereich einen Quersteg (34) zur Aufnahme der Schlitzung (33) des Federspannrings (32) aufweist.

8. Antriebsvorrichtung (1) nach einem der vorhergehenden Ansprüche, **dadurch gekennzeichnet, dass** die Welle (8) einen ringnutartigen Einstich (37) aufweist, in dem die Federringscheibe (19) gerastet gehaltert ist.

9. Antriebsvorrichtung (1) nach einem der vorhergehenden Ansprüche, **dadurch gekennzeichnet, dass** die Federringscheibe (19) aus Kunststoff, insbesondere einem Polyamid ist, wobei der Kunststoff eine Gleitmittebeschichtung aus insbesondere Graphit, Molybdändisulfid odgl. aufweist bzw. Graphit, Molybdändisulfid odgl. enthält.

10. Antriebsvorrichtung (1) nach einem der vorhergehenden Ansprüche, **dadurch gekennzeichnet, dass** der Vorsprung (22) an einem Zahnrad, insbesondere einem Schneckenrad (7) eines Schneckengetriebes angeordnet ist.

11. Antriebsvorrichtung (1) nach einem der vorhergehenden Ansprüche, **dadurch gekennzeichnet, dass** der Vorsprung (22) aus einem Kunststoff, insbesondere aus Polymethylenoxid ist.

12. Antriebsvorrichtung nach einem der vorhergehenden Ansprüche, **dadurch gekennzeichnet, dass** der Ringbund (23) an einem Gehäusedeckel (13) des Gehäuses (4), insbesondere einem Zinkdruckgussdeckels angeordnet ist.

## Claims

1. Drive device (1) having an electric drive motor (1), a casing (3, 4, 13), at least one shaft (8) driven by the drive motor (2) and means of compensation to compensate for the axial play of the shaft, **characterised in that** a spring lock washer (19), which is radially expandable against a spring force and has two butting faces (20, 21) running radially to the axis of the shaft and converging like a wedge, is arranged on the shaft (8) as means of compensation, and **in that** the shaft (8) has an annular projection (22) corresponding to one butting face (21) and the casing has an annular flange (23) corresponding to the other butting face (20), the spring lock washer (19) being arranged between the projection (22) and the annular flange (23) under a preloading force.

2. Drive device (1) according to Claim 1, **characterised in that** the butting faces (20, 21) run symmetrically at an angle of approximately 15° to the plane (24) formed by the spring lock washer (19), the faces of the annular flange (23) and of the projection (22) corresponding to the butting faces (20, 21) having a corresponding inclination.

3. Drive device (1) according to Claim 1, **characterised in that** the spring lock washer (19) is slotted.

4. Drive device (1) according to Claim 1, 2 or 3 **characterised in that** spring clamping ring (19) has slot-like recesses (28) in the area of its inner circumference.

5. Drive device (1) according to any one of the preceding Claims, **characterised in that** the spring lock washer (19) has a slotted spring clamping ring (32).

6. Drive device (1) according to Claim 5, **characterised in that** the spring clamping ring (32) is arranged in a groove (29) running around the circumference of the spring lock washer (19).

7. Drive device (1) according to Claim 6, **characterised in that** the groove (29) has a transverse web (34) in the area remote from the slot (27) in the spring lock washer (19) in order to accommodate the slot (33) in the spring clamping ring (32).

8. Drive device (1) according to any one of the preceding Claims, **characterised in that** the shaft (8) has a recess (37) resembling an annular groove, in which the spring lock washer (19) snaps.

9. Drive device (1) according to any one of the preceding Claims, **characterised in that** the spring lock washer (19) is made of plastic, in particular a polyamide, the plastic having a lubricant coating, especially one of graphite, molybdenum sulphide, or the like, or containing graphite, molybdenum sulphide or the like.

10. Drive device (1) according to any one of the preceding Claims, **characterised in that** the projection (22) is arranged on a gear wheel, in particular a worm wheel (7) of a worm gear mechanism.

11. Drive device (1) according to any one of the preceding Claims, **characterised in that** the projection (22) is made from a plastic, in particular from polymethylene oxide.

12. Drive device (1) according to any one of the preceding Claims, **characterised in that** the annular flange (23) is arranged on a casing cover (13) of the casing (4), especially a zinc die cast cover.

## Revendications

1. Dispositif d'entraînement (1) comprenant un moteur de commande (2) électrique, un boîtier (3, 4, 13), au moins un arbre (8) entraîné par le moteur de commande et des moyens de compensation pour compenser le jeu axial de l'arbre, **caractérisé en ce que** le moyen de compensation est agencé sur l'arbre (8) sous forme de disque annulaire à ressort (19), qui peut s'élargir dans le sens radial à l'encontre d'une force de ressort et qui comporte deux surfaces de butée (20, 21) convergeant en forme de cône l'une vers l'autre dans le sens radial vers l'axe de l'arbre, **en ce que** l'arbre (8) comporte une saillie annulaire (22) qui coopère avec l'une des surfaces de butée (21) et le boîtier (4, 13) comporte une collerette annulaire (23) qui coopère avec l'autre surface de butée (20), le disque annulaire à ressort (19) étant agencé entre la saillie (22) et la collerette annulaire (23) sous une force de précontrainte.

2. Dispositif d'entraînement (1) selon la revendication 1, **caractérisé en ce que** les surfaces de butée (20, 21) s'étendent symétriquement en formant un angle de 15° environ avec le plan (24) formé par le disque annulaire à ressort (19), tandis que les surfaces de la collerette annulaire (23) et de la saillie (22), coopérant avec les surfaces de butée (20, 21), sont conçues avec une inclinaison correspondante.

3. Dispositif d'entraînement (1) selon la revendication 1, **caractérisé en ce que** le disque annulaire à ressort (19) est fendu.

4. Dispositif d'entraînement (1) selon la revendication 1, 2 ou 3, **caractérisé en ce que** le disque annulaire à ressort (19), dans la zone du pourtour intérieur, comporte des évidements (28) en forme de fentes.

5. Dispositif d'entraînement (1) selon l'une quelconque des revendications précédentes, **caractérisé en ce que** le disque annulaire à ressort (19) est muni d'un collier tendeur à ressort (32).

6. Dispositif d'entraînement selon la revendication 5, **caractérisé en ce que** le collier tendeur à ressort (32) est posé dans une rainure (29) qui s'étend le long du pourtour du disque annulaire à ressort (19) .

7. Dispositif d'entraînement (1) selon la revendication 6, **caractérisé en ce que** la rainure (29), dans la zone opposée à la fente (27) du disque annulaire à ressort (19), comporte une barrette transversale (34) destinée à recevoir la fente (33).

8. Dispositif d'entraînement (1) selon l'une quelconque des revendications précédentes, **caractérisé en ce que** l'arbre (8) est muni d'une encoche (37) en forme de gorge circulaire, dans laquelle est maintenu bloqué le disque annulaire à ressort (19).

9. Dispositif d'entraînement (1) selon l'une quelconque des revendications précédentes, **caractérisé en ce que** le disque annulaire à ressort (19) est réalisé en matière plastique, en particulier en polyamide, la matière plastique étant soit munie d'un revêtement glissant, en particulier du graphite, du bisulfure de molybdène ou matière similaire, soit contenant du graphite, du bisulfure de molybdène ou matière similaire.

10. Dispositif d'entraînement (1) selon l'une quelconque des revendications précédentes, **caractérisé en ce que** la saillie (22) est réalisée sur une roue dentée, en particulier une roue hélicoïdale (7) d'un engrenage à vis sans fin.

11. Dispositif d'entraînement (1) selon l'une quelconque des revendications précédentes, **caractérisé en ce que** la saillie (22) est réalisée en matière plastique, en particulier en polyméthylène oxyde.

12. Dispositif d'entraînement selon l'une quelconque des revendications précédentes, **caractérisé en ce que** la collerette annulaire (23) est réalisée au niveau d'un couvercle (13) du boîtier (4), en particulier un couvercle en zinc coulé par injection.
